Europäisches Patentamt

European Patent Office

Office européen des brevets

(11) Publication number: **0 419 119 A2**

# EUROPEAN PATENT APPLICATION

(21) Application number: 90309991.9

(51) Int. Cl.5: **H04B 10/20**

(22) Date of filing: 12.09.90

(30) Priority: 21.09.89 GB 8921339

(43) Date of publication of application:
27.03.91 Bulletin 91/13

(84) Designated Contracting States:
DE ES FR IT NL SE

(71) Applicant: Smiths Industries Public Limited
Company
765, Finchley Road
London, NW11 8DS(GB)

(72) Inventor: Taylor, Robert Myles
65, Brunswick Street
Cheltenham, Gloucestershire, GL50 4DD(GB)

(74) Representative: Flint, Jonathan McNeill
SMITHS INDUSTRIES PUBLIC LIMITED
COMPANY 765 Finchley Road
London NW11 8DS(GB)

(54) Optical systems.

(57) An optical ladder has several optical sensors D1 to D6 connected in parallel between an input bus 3 and an output bus 40 via respective input couplers 11 to 16 and output couplers 121 to 126. Radiation from a source 2 is supplied to the input bus 3 from where it is coupled to each sensor D1 to D6 in turn after passage through any upstream input couplers on the input bus. A detector 5 receives radiation on the output bus 40. The output couplers 121 to 126 are connected so that radiation from the sensor D1 closest the source 2 has to pass through the output couplers 122 to 126 of the other devices D2 to D6, whereas radiation from the sensor D6 furthest from the source 2 passes directly to the detector 5 without having to pass through the other couplers 121 to 125. In this way, all the input and output couplers 11 to 16 and 121 to 126 can have identical coupling coefficients.

## Fig.2.

## OPTICAL SYSTEMS

This invention relates to optical systems of the kind including a source of optical radiation, an input bus that receives radiation from the source, first and second optical devices each having an input and an output, first second input couplers connected with respective ones of the optical devices, the first input coupler supplying a part of the radiation on the input bus to the first device, closer the source, and passing a remaining part of the radiation further along the bus to the second input coupler, the second input coupler supplying at least a part of radiation on the input bus to the second device, and first and second output couplers connected with respective ones of the optical devices and supplying radiation from the respective devices to a detector via an output bus.

Several arrangements of fibre-optic sensor or other optical device networks have been proposed in which a plurality of sensors or other optical devices are multiplexed to a common detector. Some of the commonly used networks are ladder networks in which an input line or bus is connected to an output bus by parallel rungs in which the respective sensors are disposed. Optical radiation is supplied to each rung by an input coupler which diverts a small proportion of the radiation to the first sensor and allows the remaining radiation to pass further along the input bus to the next rung where a similar coupler diverts another part of the radiation to the second sensor, and so on. The amount of radiation on the input bus will therefore diminish after each coupler. Similar couplers link each rung with the output bus. The amount of radiation supplied from each rung to the output bus will be diminished by the output coupler between each rung and the output bus. Furthermore, each output coupler will have a diminishing effect on radiation supplied to the output bus from upstream rungs. In conventional networks, radiation is supplied to the output bus in the opposite direction from that supplied to the input bus so that the output from the first sensor is supplied directly to the detector. The output from the second sensor must pass through the coupler between the first rung and the output bus and is thereby diminished by the action of this coupler. It can be seen, therefore, that the outputs from the further sensors will suffer a greater reduction in intensity than the nearer sensors before they reach the detector, because they have to pass through a greater number of output couplers.

The combined effect of the input and output couplers means, therefore, that, if the level of radiation received by the detector is to be the same from each sensor, the input couplers associated with each sensor must vary in the proportion of radiation which they divert to each rung so that increasing proportions of radiation are supplied to the rungs further from the source. The need to use different couplers increases the cost and difficulty of manufacturing the couplers and makes it more difficult to replace the components of the network.

It is an object of the present invention to provide an optical system that can be used to avoid the difficulties of previous systems.

According to one aspect of the present invention there is provided an optical system of the above-specified kind, characterised in that the first output coupler is connected such that a part at least of the radiation from the first device is supplied to the detector on the output bus via the second output coupler, and that the second output coupler is connected such that a part of the radiation from the second device is supplied to the output bus and passes directly to the detector.

The system preferably includes at least one additional optical device having an input and an output, additional input couplers connected with the or each respective additional optical device that supply a part of the radiation on the input bus to the or each respective additional optical device after the first input coupler and pass a remaining part of the radiation further along the input bus to the second device, and additional output couplers connected with the or each respective additional optical device that supply radiation from the or each respective additional optical device to the detector via the output bus such that radiation from the or each respective additional optical device passes to the detector via the second output coupler and such that radiation from the first optical device passes through the or each additional output coupler before the second output coupler.

The second input coupler may supply a part only of the radiation on the input bus to the second optical device, the first output coupler supplying a part only of the radiation from the first optical device to the output bus. Each input coupler may have substantially the same coupling coefficient as others of the input couplers and each output coupler may have substantially the same coupling coefficient as others of the output couplers.

Alternatively, the second input coupler may supply substantially all the radiation on the input bus to the second optical device, and the first output coupler may supply substantially all the radiation from the first optical device to the output bus. In this case, the coupling coefficients of the additional input couplers are preferably substantially identical but different from the coupling coefficient of the first input coupler, and the coupling coefficients of the additional output couplers are substantially identical but different from the coupling coefficient of the second output coupler. The coupling coefficient of the first input coupler is preferably substantially identical with the coupling coefficient of the second output coupler and substantially equal to the product of the coupling coefficient of one of the additional input couplers with the coupling coefficient of one of the additional output couplers.

The input bus and output bus may comprise respective fibre-optic cables. At least one of the optical devices may be an optical sensor.

A conventional optical ladder network, and a network in accordance with the present invention, will now be described, by way of example, with reference to the accompanying drawings, in which:

Figure 1 is a schematic diagram of a conventional network;

Figure 2 is a schematic diagram of a network of the present invention; and

Figure 3 is a schematic diagram showing a modification of the network of Figure 2.

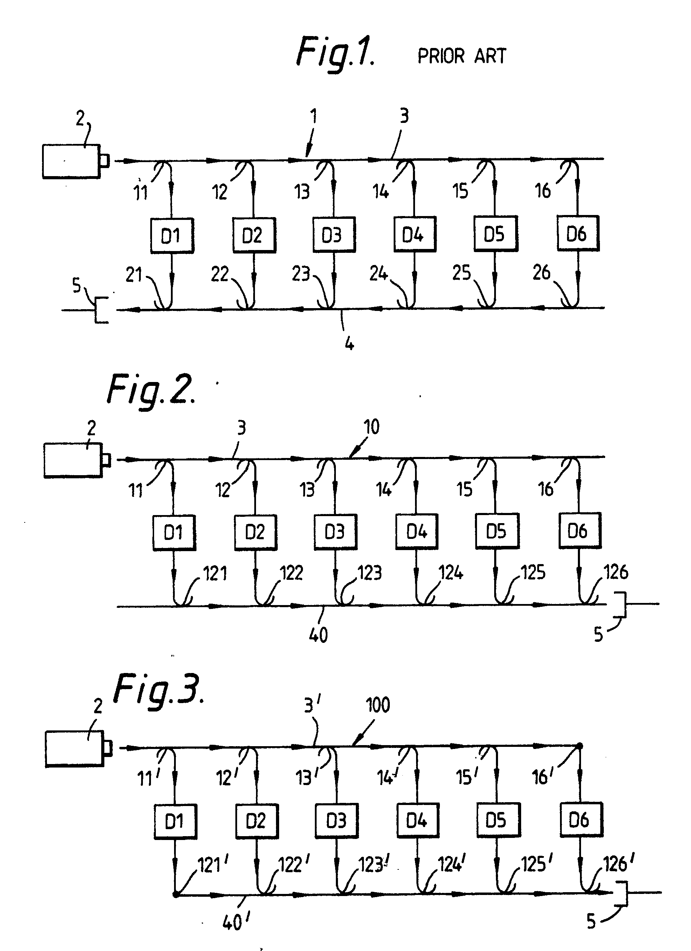

With reference first to Figure 1 there is shown a a prior art, conventional optical ladder network 1 comprising a source 2 of optical radiation, an input bus 3 in the form of a fibre-optic cable, an output bus 4 also in the form of a fibre-optic cable, a detector 5 and several optical devices D1 to D6, such as optical sensors, connected in parallel with one another between the input and output buses.

Each of the optical devices D1 to D6 is connected to the input bus 3 by a respective conventional input coupler 11 to 16 which taps a part of the radiation from the input bus and supplies this to the respective optical device. The input couplers 11 to 16 allow the remaining part of the radiation, less any losses, to pass further along the bus to succeeding couplers which operate in the same way. If couplers 11 to 16 are identical with one another they may be regarded as having a coupling coefficient C and a transmission coefficient T. That is, if the amplitude of radiation on the input bus 3 immediately upstream of the first coupler 11 is A then the radiation supplied to the first device D1 will be AC and the radiation passed by the coupler on the input bus for transmission downstream will be AT. It can be seen, therefore, that the second coupler D2 will receive a lower level of radiation AT than the first coupler and that a corresponding lower amount of radiation will be supplied to the second device D2 that is, ATC. The radiation supplied to each succeding device D3 to D6 will also be reduced in the manner set out below:

| Device | Radiation Amplitude |
|--------|---------------------|
| D1 | AC |
| D2 | ATC |
| D3 | $AT^2C$ |
| D4 | $AT^3C$ |
| D5 | $AT^4C$ |
| D6 | $AT^5C$ |

Each of the optical devices D1 to D6 has an output connected to the output bus 4 by a respective output coupler 21 to 26 which operates in the same way as the input couplers 11 to 16. The output couplers 21 to 26 are arranged to direct radiation along the output bus 4 in the opposite direction from the input bus 3 so that radiation from the first device D1 is supplied directly to the detector 5. The radiation from, for example, the second device D2 must, however, pass through the output coupler 21 of the first device D1 before reaching the detector 5. The manner of operation of the output couplers 21 to 26 is similar to that of the input couplers 11 to 16 such that only a part of the radiation from the respective device will be tapped onto the output bus 4, and that any radiation passing along the output bus through the output coupler from an upstream source will undergo a transmission loss. If the output couplers 21 to 26 are identical to the input couplers 11 to 16 they will have a coupling coefficient C and a transmission coefficient T. In practice, each device D1 to D6 will reduce the amplitude of radiation transmitted through it but, for simplicity, it is assumed here that it has no effect and that the amplitude of radiation supplied to the output coupler is, therefore, the same as that supplied to the device by its respective input coupler. In this way, the amplitude of radiation supplied, for example, to the output coupler 21 will be AC. The coupling coefficient of the output coupler 21 means that the intensity of radiation coupled onto the output bus 4 will be AC X C = $AC^2$. Similarly, the amplitude of radiation from each of the devices D1 to D6 coupled onto the output bus 4 immediately downstream of their respective output coupler 21 to 26 will be as follows:

3

| Device | Radiation Amplitude |
|--------|---------------------|
| D1 | $AC^2$ |
| D2 | $ATC^2$ |
| D3 | $AT^2C^2$ |
| D4 | $AT^3C^2$ |
| D5 | $AT^4C^2$ |
| D6 | $AT^5C^2$ |

The radiation from the first output coupling device 21 is supplied directly to the detector 5 so that, assuming no losses in the output bus 4 or between the bus and detector, the amplitude of radiation reaching the detector from the first device D1 will be $AC^2$. Radiation from the other devices D2 to D6, however, will have to pass through the output coupling devices 21 to 25 downstream along the output bus 4. In addition, therefore, to being subjected to the coupling coefficient C loss at their own respective output coupling, the radiation will also be subjected to a transmission coefficient loss T at each of the downstream output couplings. In this way, for example, the radiation intensity from the second device D2, as supplied to the detector 5, will be $ATC^2 \times T = AT^2C^2$. Similarly, the radiation supplied to the detector 5 from each device will be as below:

| Device | Radiation Amplitude |
|--------|---------------------|
| D1 | $AC^2$ |
| D2 | $AT^2C^2$ |
| D3 | $AT^4C^2$ |
| D4 | $AT^6C^2$ |
| D5 | $AT^8C^2$ |
| D6 | $AT^{10}C^2$ |
| or, in general, | |
| Dn | $AT^{2(n-1)}C^2$ |

With conventional ladder networks, therefore, the radiation contibution from each device, as seen by the detector, will differ one from the other. In order to compensate for this, it is usual practice to use couplers having different coupling/transmission coefficients arranged such that the coupling coefficients increase along the ladder, away from the source. Because each coupler must be provided with accurately defined, different coupling coefficients, this makes them more difficult to manufacture and therefore more expensive. Repair of a ladder network is also made more difficult because of the need to know the precise characteristics of each coupler and to have spares of each of the different couplers.

The ladder network 10 of the present invention is shown in Figure 2 and has various components that are same as those in the arrangement of Figure 1 and which, therefore, have been given the same reference numeral. More particularly, the input side of the network 10 including the source 2, fibre-optic input bus 3, input couplers 11 to 16 and also the optical sensors or other devices D1 to D6 are all the same as in the previous arrangement.

The network 10 also has a fibre-optic output bus 40 and output couplers 121 to 126 which supply radiation from the devices D1 to D6 to a detector 5 but these are arranged in a novel way. In particularly, the output couplers 121 to 126 are arranged such that radiation on the output bus 40 flows in the same sense as that on the input bus 3, namely from the first device D1 (closest to the source) to the last device D6 (furthest from the source). Radiation from the first device D1 is supplied by the output coupler 121 to flow to the right, so that it has to pass through the output couplers 122 to 126 before reaching the detector 5. Similarly, radiation from the second device D2 is supplied to the output bus 40 by its output coupler 122 and has to pass through the output couplers 123 to 126 before reaching the detector 5. Radiation from the final device D6 is, however, supplied by its respective output coupler 126 and passes directly to the

4

detector 5 without passing through any other output coupler. Assuming the output couplers 121 to 126 to have the same coupling coefficients C and transmission coefficients T, it can be seen that radiation from the final device D6 will be reduced by the coupling coefficient C on being tapped onto the output bus 40 but will not undergo any transmission loss. The amplitude of radiation supplied by the final device D6 to the detector 5 will therefore by $AT^5 C \times C = AT^5 C^2$. On the other hand, radiation from the first device D1 will suffer a coupling coefficient C loss at its own output coupler 121 so that the intensity of radiation immediately downstream of its output coupler will be $AC \times C = AC^2$. This, however, will be reduced by transmission losses T on passage through all the other downstream output couplers 122 to 126 so that the amplitude of radiation supplied to the detector 5 by the first device D1 will be $AC^2 \times T^5 = AT^5 C^2$.

The amplitude of radiation from the first device D1 can be seen to be the same as that of the last device D6 and the same will be true of the intermediate devices D2 to D5. The forward flowing ladder network 10 of the present invention thereby enables identical couplers to be used with each optical device whilst still obtaining the same output from each device. With optimized coupling, this ladder network is typically less than 3dB below the conventional ladder network.

The ladder network could include any number of optical devices from two upwards.

The ladder network 10 shown in Figure 2 may be regarded as being of an open form in which the final input coupler 16 is identical to the other input couplers 11 to 15, and only diverts a part of the radiation on the input bus 3 to the final device D6. Similarly, the first output coupler 121 only diverts a part of the radiation from the first device onto the output bus 40. This results in radiation losses which can be avoided by the closed form of network 100 shown in Figure 3. In this arrangement the last input coupler 16′ differs from the other input couplers 11′ to 15′ in that it supplies all the radiation on the input bus 3′ at that point, to the final device D6. Similarly, the first output coupler 121′ supplies all the radiation from the first device D1 onto the output bus 40′. With such an arrangement, assuming the coupling coefficient of the input coupler 16′ and output coupler 121′ to be unity, the radiation supplied to the detector 5 from each device will be as follows:

| Device | Radiation Amplitude |
|---|---|
| D1 | $AT^5 C$ |
| D2 | $AT^5 C^2$ |
| D3 | $AT^5 C^2$ |
| D4 | $AT^5 C^2$ |
| D5 | $AT^5 C^2$ |
| D6 | $AT^5 C$ |

It can be seen that the outputs from the first and last devices D1 and D6, as seen by the detector 5, are identical so that, in a ladder network including only two devices, this closed system would be satisfactory without modification.

In a network, however, including more than two devices, the outputs from the first and last devices, as seen by the detector, will be different from the outputs of the intermediate devices. This can be compensated for by having a different coupling coefficient C′ at the first input coupler 11′ and the last output coupler 126′. The coupling coefficient of these two couplers 11′ and 120′ would be selected so that they are both equal to the product of the coupling coefficients of an input and output coupler associated with one of the other optical devices D2 to D5. Where the input and output coupling coefficients of the couplers 12′ to 15′ and 122′ to 125′ are each equal to C, then the coupling coefficients C′ of the first input coupler 11′ and the last output coupler 120′ are selected to be $C^2$, thereby resulting in an equal output response at the detector for each device. The need to use different couplers on the first and last devices in the network reduces the advantage of the invention to a certain degree but this arrangement can still be advantageous where a long ladder network including many devices is involved.

The optical devices D1 to D6 may be optical sensors such as, for example, optical pressure or temperature sensors which are arranged to modify the radiation supplied to them in response to change in the input variable being sensed.

**Claims**

5

1. An optical system including a source of optical radiation, an input bus that receives radiation from the source, first and second optical devices each having an input and an output, first and second input couplers connected with respective ones of the optical devices, the first input coupler supplying a part of the radiation on the input bus to the first device, closer the source, and passing a remaining part of the radiation further along the bus to the second input coupler, the second input coupler supplying at least a part of the radiation on the input bus to the second device, first and second output couplers connected with respective ones of the optical devices and supplying radiation from the respective devices to a detector via an output bus, characterised in that the first output coupler (121, 121') is connected such that a part at least of the radiation from the first device (D1) is supplied to the detector (5) on the output bus (40, 40') via the second output coupler (126, 126'), and that the second output coupler (121, 121') is connected such that a part of the radiation from the second device (D6) is supplied to the output bus (40, 40') and passes directly to the detector (5).

2. An optical system according Claim 1, characterised in that the system includes at least one additional optical device (D2 to D5) having an input and an output, additional input couplers (12 to 15, 12' to 15') connected with the or each respective additional optical device that supply a part of the radiation on the input bus (3, 3') to the or each respective additional optical device (D2 to D5) after the first input coupler (11, 11') and pass a remaining part of the radiation further along the input bus (3, 3') to the second device (D6), and additional output couplers (122 to 125, 122' to 125') connected with the or each respective additional optical device (D2 to D5) that supply radiation from the or each respective additional optical device to the detector (5) via the output bus (40, 40') such that radiation from the or each respective additional optical device (D2 to D5) passes to the detector (5) via the second output coupler (126, 126') and such that radiation from the first optical device (D1) passes through the or each additional output coupler (122 to 125, 122' to 125') before the second output coupler (126, 126').

3. An optical system according to Claim 1 or 2, characterised in that the second input coupler (16) supplies a part only of the radiation on the input bus (3) to the second optical device (D6), and that the first output coupler (121) supplies a part only of the radiation from the first optical device (D1) to the output bus (40).

4. An optical system according to any one of the preceding claims, characterised in that each input coupler (11 to 16) has substantially the same coupling coefficient as others of the input couplers (11 to 16).

5. An optical system according to any one of the preceding claims, characterised in that each output coupler (121 to 126) has substantially the same coupling coefficient as others of the output couplers (121 to 126).

6. An optical system according to Claim 1 or 2, characterised in that the second input coupler (16') supplies substantially all the radiation on the input bus (3') to the second optical device (D6), and that the first output coupler (121') supplies substantially all the radiation from the first optical device (D1) to the output bus (40').

7. An optical system according to Claims 6 and 2, characterised in that the coupling coefficients of the additional input couplers (12' to 15') are substantially identical but different from the coupling coefficient of the first input coupler (11'), and that the coupling coefficients of the additional output couplers (122' to 125') are substantially identical but different from the coupling coefficient of the second output coupler (126').

8. An optical system according to Claim 7, characterised in that the coupling coefficient of the first input coupler (11') is substantially identical with the coupling coefficient of the second output coupler (126') and substantially equal to the product of the coupling coefficient of one of the additional input couplers (12' to 15') with the coupling coefficient of one of the additional output couplers (122' to 125').

9. An optical system according to any one of the preceding claims, characterised in that the input bus (3, 3') and output bus (40, 40') comprise respective fibre-optic cables.

10. An optical system according to any one of the preceding claims, characterised in that at least one of the optical devices (D1 to D6) is an optical sensor.

6

## Fig.1. PRIOR ART

## Fig.2.

## Fig.3.